# FASCICULE DE BREVET EUROPEEN

(11) **EP 0 677 395 B1**
(45) Date de publication et mention de la délivrance du brevet: **08.07.1998**
(21) Numéro de dépôt: 95400838.9
(22) Date de dépôt: 12.04.1995
(51) Int. Cl.: B41J 29/17

(54) **Carte de nettoyage pour machine à imprimer et poste de personnalisation électrique des cartes**
Reinigungskarte für Kartendrucker und Station zur elektrischen Personifizierung von Karten
Cleaning card for card printer and electrical card personalisation station

(30) Priorité: 15.04.1994 FR 9404831
(43) Date de publication de la demande: 18.10.1995
(73) Titulaire: GEMPLUS CARD INTERNATIONAL, F-13420 Gémenos (FR)
(72) Inventeur: Morgavi, Paul, Cabinet Ballot-Schmit, F-75116 Paris (FR)
(74) Mandataire: Ballot, Paul Denis Jacques

(56) Documents cités:
- EP-A- 0 379 959
- DE-A- 1 961 899
- PATENT ABSTRACTS OF JAPAN vol. 15, no. 169 (P-1196) 26 Avril 1991 & JP-A-03 034 112 (NIPPON AREFU K.K.) 14 Février 1991
- PATENT ABSTRACTS OF JAPAN vol. 13, no. 577 (M-910) (3925) 20 Décembre 1989 & JP-A-01 242 278 (CANON INC) 27 Septembre 1989

## Description

La présente invention concerne une carte de nettoyage pour machine à imprimer des cartes par transfert thermique, dotée d'un poste de travail où s'effectue la personnalisation électrique des cartes.

Il est connu des machines à imprimer des cartes, notamment en matière plastique, mettant en oeuvre la technologie du transfert thermique dans laquelle les colorants primaires, déposés sur un ruban plastique, sont successivement fixés sur le support à imprimer par une tête d'impression thermique.

Ces machines à imprimer des cartes en noir et blanc, en couleurs, soit d'un seul côté recto, soit sur les deux côtés recto et verso après retournement ou simultanément sur les deux faces, ont fait l'objet de demandes de brevets français déposées par la demanderesse.

Dans ces machines, la carte à imprimer, généralement conforme à la norme ISO 7816-2, est toujours approvisionnée, convoyée, éventuellement retournée, transférée d'un poste de travail à un autre, par un ensemble de rouleaux d'entraînement qui poussent ou tirent la carte sous la ou les têtes d'impression thermique, ainsi qu'à l'intérieur du dispositif de personnalisation électrique des cartes. Cette personnalisation électrique consistant en un marquage, électrique ou magnétique, au moyen de contact à atterrissage, à des emplacements définis par des normes AFNOR et ISO.

Le fonctionnement de ces machines à imprimer et à personnaliser électriquement les cartes suscite un déplacement de poussières attirées par le phénomène d'électricité statique provoqué par les frottements entre les cartes plastiques, le ruban plastique et les divers rouleaux.

La technologie de transfert thermique peut également provoquer des dépôts de taches de colorants sur les cartes, notamment en cas de collage entre carte et ruban ramollis par l'élévation de température, lesdites taches venant souiller les divers rouleaux de transport externes ou internes.

Les contacts à atterrissage du poste de personnalisation électrique ont également tendance à se salir puisque les zones de marquage de cartes sont également soumises aux poussières attirées par l'électricité statique des frottements et sont vulnérables aux taches de colorants. Ces salissures peuvent entraîner des mauvais contacts, voire isoler l'emplacement à marquer électriquement et entraîner un report des cartes défectueuses.

Pour pallier ces inconvénients, l'invention a pour but de réaliser le nettoyage d'une machine à imprimer au moyen d'une carte particulière dotée de deux éléments nettoyants.

Le brevet japonais JP-A-3 034 112 décrit une carte de nettoyage qui comprend un support 11, de dimensions substantiellement identiques à celles de la carte à imprimer, dont une face est entièrement recouverte d'un revêtement adapté à nettoyer une tête de lecture/écriture magnétique et dont l'autre face est entièrement recouverte d'un revêtement destiné à nettoyer une tête d'impression.

Une telle carte de nettoyage n'est pas adaptée au nettoyage, en un seul passage, d'éléments qui sont disposés du même côté de la carte et qui nécessitent des agents nettoyants très différents.

L' invention concerne donc une carte de nettoyage des dispositifs d'entraînement d'une machine à imprimer les cartes et des contacts électriques d'un poste de personnalisation électrique des cartes comportant des contacts à atterrissage, caractérisée en ce qu'elle comprend :
- un support de dimension substantiellement identique à celle des cartes à imprimer par ladite machine à imprimer dans le sens transversal au déplacement de ladite carte,
- un premier tampon de nettoyage fixé sur au moins une face dudit support et disposé sur cette face de manière à recouvrir toute sa largeur transversale et à être espacé des côtés transversaux dudit support, ledit premier tampon de nettoyage étant adapté à nettoyer les dispositifs d'entraînement de la carte à imprimer, et
- un deuxième tampon de nettoyage fixé sur une face dudit support et disposé adjacent au premier tampon de nettoyage au regard des contacts à atterrissage du poste de personnalisation électrique des cartes à imprimer, ledit deuxième tampon de nettoyage étant adapté à nettoyer lesdits contacts à atterrissage.

D'autres caractéristiques et avantages de la présente invention apparaîtront à la description suivante d'un exemple particulier de l'invention, ladite description étant faite en relation avec le dessin joint dans lequel :
- la figure 1 est une vue d'une face de la carte de nettoyage, côté emplacements de marquage électrique ou magnétique,
- la figure 2 est une vue en coupe longitudinale de la carte de nettoyage,
- la figure 3 est une vue schématique du nettoyage de rouleaux d'entraînement,
- la figure 4 est une vue schématique du nettoyage des contacts à atterrissage.

La carte de nettoyage, selon l'invention, comprend une carte 10, qui est semblable à la carte que l'imprimante est supposée imprimer pour ce qui concerne sa surface et qui peut être d'épaisseur inférieure à l'épaisseur minimum. Dans le cas de cartes bancaires, la carte 10 est conforme à la norme ISO 7816.2 et son épaisseur peut être inférieure à 0,680 mm. Cette carte est revêtue d'un premier moyen de nettoyage des poussières et salissures diverses qui est constitué d'au moins un tampon plat 11 (ou 11A) dont une face est collée sur une face 21 (ou 21A) de la carte. L'autre face du tampon 11 (ou 11A) est revêtue d'un matériau 22 (ou 22A) qui est prévu pour collecter et retenir les poussières et salissures. Ce matériau 22 (ou 22A) peut être une matière adhésive sur laquelle viennent se coller les poussières et salissures.

Le tampon 11 ou 11A revêt toute la carte 10 dans sa largeur mais seulement une partie de celle-ci dans sa longueur, notamment dans le cas où la carte comporte un circuit intégré dans une cavité, de manière à permettre la mise en place d'un second moyen de nettoyage 12 des contacts électriques qui ont pour but de coopérer avec les bornes ou plots d'entrée/sortie du circuit intégré présent dans la carte.

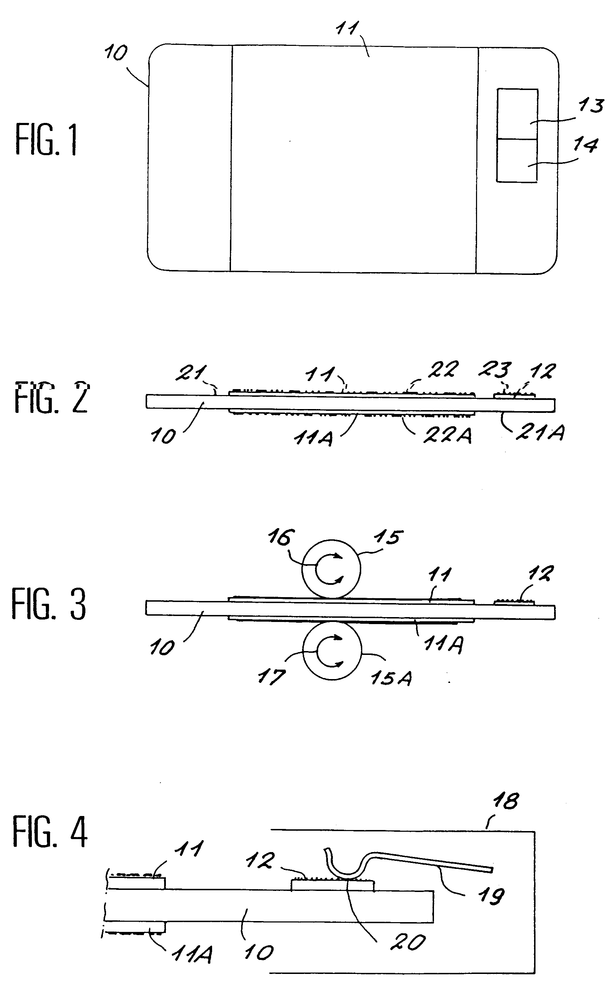

Ce second moyen de nettoyage est constitué d'un tampon 12 dont une face est collée sur la face 21, celle prévue pour les plots d'entrée/sortie du circuit intégré. L'autre face du tampon 12 est revêtue d'un matériau 23 qui est prévu pour nettoyer les contacts électriques 19 (figure 4). Ce matériau 23 est par exemple un papier abrasif de grain très fin. Ce deuxième tampon 12 est disposé à l'emplacement prévu pour les plots d'entrée/sortie du circuit intégré et a une surface suffisamment grande pour respecter les normes électriques rencontrées, notamment la norme ISO correspondant au rectangle 14 et la norme AFNOR correspondant au rectangle 13.

L'épaisseur du tampon 12 et du matériau abrasif 23 est inférieure à celle du tampon 11 augmentée de la couche 22 de manière à ne pas venir en contact avec les éléments à nettoyer autres que les contacts électriques.

Pour effectuer le nettoyage de la machine à imprimer à laquelle est associé un poste de personnalisation électrique, la carte est introduite dans le système d'alimentation de la machine à imprimer par transfert thermique dont on veut nettoyer les organes de convoyage et de personnalisation électrique. Le nettoyage s'opère obligatoirement avec la tête d'impression thermique en position neutre, c'est-à-dire correspondant au déplacement de la carte sous la ou les têtes d'impression thermique sans contact avec celle(s)-ci.

Lorsque la carte de nettoyage passe entre des rouleaux 15, 15A de convoyage externe ou interne, dans un sens ou dans l'autre 16, 17, le tampon 11, 11A, se charge des poussières et dépôts divers présents à la surface des rouleaux et les retient dans sa structure adhésive, la carte de nettoyage parcourt le cycle complet ou spécifique à chaque machine, y compris le dispositif de retournement de carte si la machine en est dotée.

La carte de nettoyage pénètre également dans le dispositif de personnalisation électrique 18 des cartes et les contacts à atterrissage 19 viennent progressivement frotter sur le papier adhésif 12 pour se débarrasser des impuretés et raviver les contacts électriques 20.

Le déplacement de la carte de nettoyage 10 dans la machine à imprimer et le poste de personnalisation électrique peut avoir lieu dans les deux sens mais il est préférable que le sens soit tel que le nettoyage des contacts électriques 19 ait lieu en dernier après leur frottement sur le tampon 11 et non pas l'inverse car, dans ce dernier cas, les contacts pourraient à nouveau se salir avec les salissures collectées par le tampon 11.

Pour résoudre ce problème, on peut aussi disposer le tampon 12 à l'autre extrémité de la carte 10 par rapport au tampon 11. Dans tous les cas, il faut aussi tenir compte de la position du poste de personnalisation électrique par rapport à la machine à imprimer dans le sens de défilement de la carte de nettoyage.

Les spécifications qui concernent la fréquence d'utilisation d'une carte de nettoyage ainsi que de la durée de l'efficacité de ladite carte sont fonction des divers types de machines à imprimer par transfert thermique, notamment nombre de postes de travail, qualité des cartes et rubans et l'ambiance de la salle de travail en ce qui concerne la poussière, la température, l'hygrométrie.

## Revendications

1. Carte de nettoyage des dispositifs d'entraînement d'une machine à imprimer les cartes et des contacts électriques d'un poste de personnalisation électrique des cartes comportant des contacts à atterrissage, caractérisée en ce qu'elle comprend :
- un support (10) de dimension substantiellement identique à celle des cartes à imprimer par ladite machine à imprimer dans le sens transversal au déplacement de ladite carte,
- un premier tampon de nettoyage (11 ou 11a) fixé sur au moins une face dudit support (10) et disposé sur cette face de manière à recouvrir toute sa largeur transversale et à être espacé des côtés transversaux dudit support, ledit premier tampon de nettoyage étant adapté à nettoyer les dispositifs d'entraînement de la carte à imprimer, et
- un deuxième tampon de nettoyage (12) fixé sur une face dudit support (10) et disposé adjacent au premier tampon de nettoyage (11 ou 11a) au regard des contacts à atterrissage (19) du poste de personnalisation électrique des cartes à imprimer, ledit deuxième tampon de nettoyage (12) étant adapté à nettoyer lesdits contacts à atterrissage (19).

2. Carte de nettoyage selon la revendication 1, caractérisée en ce que le premier tampon de nettoyage (11, 11a) est plat (11, 11A) et présente une face qui adhère au support (10) tandis que l'autre face est en un matériau (22) en mesure de collecter les poussières et dépôts divers sur les dispositifs d'entraînement (15, 15A) des cartes à imprimer.

3. Carte de nettoyage selon la revendication 1 ou 2, caractérisée en ce que le deuxième tampon de nettoyage (12) est plat et présente une face qui adhère au support (10) et dont l'autre face est en un matériau (23) abrasif de grain très fin pour débarrasser les contacts à atterrissage (19) des impuretés et raviver les contacts électriques (20).

4. Carte de nettoyage selon l'une des revendications précédentes 1 à 3, caractérisée en ce que le deuxième tampon de nettoyage (12) a une épaisseur plus faible que celle du premier tampon de nettoyage (11).

5. Carte de nettoyage selon l'une des revendications précédentes 1 à 3, caractérisée en ce que la position sur le support (10) du deuxième tampon de nettoyage (12), le sens de défilement de ladite carte et les positions relatives de la machine à imprimer et du poste de personnalisation électrique sont choisis de manière que les contacts électriques du poste de personnalisation électrique soient nettoyés en dernier.

## Claims

1. A card for cleaning drive devices of a card-printing machine and electrical contacts of an electric card personalisation station having landing contacts, characterised in that it comprises :
- a base (10) having substantially the same dimension as that of the cards to be printed by said printing machine in the direction transverse to the displacement of said card,
- a first cleaning pad (11 or 11a) fixed to at least one face of said base (10) and arranged on this face so as to cover the entire cross-width thereof and to be spaced back from the transverse sides of said base, said first cleaning pad being designed to clean the devices used to drive said card to be printed and
- a second cleaning pad (12) fixed onto a face of said base (10) and arranged adjacent to the first cleaning pad (11 or 11a) with regard to the landing contacts (19) of the electric personalisation station for the cards to be printed, said second cleaning pad (12) being designed to clean said landing contacts (19).

2. Cleaning card as claimed in claim 1, characterised in that the first cleaning pad (11, 11a) is flat (11, 11A) and has a face which adheres to the base (10) whilst the other face is made from a material (22) capable of collecting the dust and various deposits on the drive devices (15, 15A) for the cards to be printed.

3. A cleaning card as claimed in claim 1 or 2, characterised in that the second cleaning pad (12) is flat and has a face which adheres to the base (10) and the other face is made from a very finely grained material (23) for removing impurities from the landing contacts (19) and cleaning the electrical contacts (20).

4. A cleaning card as claimed in one of the preceding claims 1 to 3, characterised in that the second cleaning pad (12) is smaller in thickness than the first cleaning pad (11).

5. A cleaning card as claimed in one of the preceding claims 1 to 3, characterised in that the position of the second cleaning pad (12) on the base (12), the direction in which said card is fed and the relative positions of printing machine and electric personalisation station are chosen so that the electrical contacts of the electric personalisation station are cleaned last.

## Patentansprüche

1. Karte zum Reinigen von Antriebsmitteln eines Kartendruckers und elektrischer Kontakte einer Station zur elektrischen Personalisierung von Karten mit Aufsetzkontakten, **gekennzeichnet** durch
einen Träger (10) mit einer Abmessung, die in der Querrichtung zur Bewegungsrichtung der Karte im wesentlichen identisch mit der Abmessung der von dem Kartendrucker zu bedruckenden Karten ist,
ein erstes Reinigungskissen (11 oder 11a), das auf wenigstens einer Seite des Trägers (10) befestigt ist und auf dieser Seite so angeordnet ist, daß es in der Querrichtung deren gesamte Breite bedeckt und einen Abstand zu den Querseiten des Trägers hat, wobei das erste Reinigungskissen die Antriebsmittel der zu bedruckenden Karte reinigen kann, und
ein zweites Reinigungskissen (12), das auf einer Seite des Trägers (10) angebracht ist und neben dem ersten Reinigungskissen (11 oder 11a), den Aufsetzkontakten (19) der Station zur elektrischen Personalisierung der zu bedruckenden Karten zugewandt angeordnet ist, wobei das zweite Reinigungskissen (12) die Aufsetzkontakte (19) reinigen kann.

2. Reinigungskarte nach Anspruch 1, dadurch **gekennzeichnet,** daß das erste Reinigungskissen (11, 11a) flach (11, 11A) ist und eine Seite aufweist, die an dem Träger (10) haftet, während die andere Seite aus einem Material (22) besteht, das den Staub und verschiedene Ablagerungen auf den Antriebsmitteln (15, 15A) für die zu bedruckenden Karten aufnehmen kann.

3. Reinigungskarte nach Anspruch 1 oder 2, dadurch **gekennzeichnet,** daß das zweite Reinigungskissen (12) flach ist und eine Seite aufweist, die an der Unterlage (10) haftet, wobei die andere Seite aus einem Schleifmaterial (23) mit sehr feiner Körnung besteht, um Verunreinigungen von den Aufsetzkontakten (19) zu entfernen und die elektrischen Kontakte (20) nachzupolieren.

4. Reinigungskarte nach einem der vorangehenden Ansprüche 1 bis 3, dadurch **gekennzeichnet,** daß das zweite Reinigungskissen (12) eine geringere Dicke hat als das erste Reinigungskissen (11).

5. Reinigungskarte nach einem der vorangehenden Ansprüche 1 bis 3, dadurch **gekennzeichnet,** daß die Position des zweiten Reinigungskissens (12) auf der Unterlage (10), die Bewegungsrichtung der Karte und die relativen Positionen des Kartendruckers und der Station für die elektrische Personalisierung so gewählt sind, daß die elektrischen Kontakte der Station für die elektrische Personalisierung zuletzt gereinigt werden.
